# EUROPEAN PATENT SPECIFICATION

(11) **EP 0 513 113 B1**
(45) Date of publication and mention of the grant of the patent: **29.05.1996**
(21) Application number: 91903404.1
(22) Date of filing: 23.01.1991
(51) Int. Cl.: H04B 5/06, H04B 7/26, G08B 3/10

(54) **METHOD FOR TRANSFERRING MESSAGES IN A ONE-WAY COMMUNICATION SYSTEM**
VERFAHREN ZUR ÜBERTRAGUNG VON NACHRICHTEN IN EINEM EINRICHTUNGSKOMMUNIKATIONSSYSTEM
PROCEDE DE TRANSFERT DE MESSAGES DANS UN SYSTEME DE COMMUNICATIONS A SENS UNIQUE

(30) Priority: 02.02.1990 SE 9000376
(43) Date of publication of application: 19.11.1992
(73) Proprietor: TELIA AB, S-123 86 Farsta (SE)
(72) Inventor: ERIKSSON, Göran, S-136 80 Haninge (SE); BEIJER, Thomas, S-136 80 Haninge (SE); EDBOM, Göran, S-136 80 Haninge (SE)
(86) International application number: SE9100047
(87) International publication number: WO9111866

(56) References cited:
- GB-A- 2 072 908
- GB-A- 2 110 850
- US-A- 4 713 808

## Description

### TITLE OF THE INVENTION: METHOD FOR TRANSFERRING MESSAGES IN A ONE-WAY COMMUNICATION SYSTEM

The present invention relates to a method for transferring messages in a one-way communication system. To be precise, the invention is intended for application in a paging system.

In earlier paging systems, the address and message have been transmitted in one and the same block. According to the invention, addressing and message transmission are separated. This provides the possibility of good battery saving and a high degree of utilisation of the radio channel.

US-A-4 713 808 discloses a wide area paging system in which paging messages input to the system in one local area can be broadcast to a receiver in any other local area without broadcasting the messages in all areas. Message packets are transmitted in a time-slotted format. A power-limited receiver will turn on briefly during its assigned time slot to detect if its full address matches the address in the packet.

GB-A-2 110 850 discloses a radio paging arrangement comprising a plurality of adjacent radio paging systems, each comprising a plurality of receivers being responsive to recognition of a preamble signal. To ensure that a transmission in one system will not cause switching of receivers in another system into an operational mode, the coding of the preamble is different in each system.

GB-A-2 072 908 discloses a radio paging communication system in which receivers are responsive to double preamble signals to go into an operational mode for listening to a message belonging to the receiver.

The object of the invention is achieved by means of a method for transferring messages in a one-way communication system in accordance with the subsequent claim.

The invention will now be described in detail with respect to the following drawings, in which:

Figure 1 diagrammatically shows the format in three layers according to the invention.

Figure 2 shows the hierarchical structure of the format layer.

Figure 3 shows sharing examples of time division in the network.

Figure 4 shows the synchronisation between the channels and the search procedure.

Figure 5 shows a record structure.

Figure 6 shows the grouping of frequency subsets.

Figure 7 shows the address part.

Figure 8 shows the structure of the radio identity code.

Figure 9 shows the format of the address field.

Figure 10 shows the section of the message field

Figure 11 shows the handling of tone-only calling

Figure 12 shows the transmission of the last message number.

Figure 13 shows the remote programming of radio identity codes.

### DETAILED DESCRIPTION OF A PREFERRED EMBODIMENT OF THE INVENTION

According to the present invention, a method is provided for transferring messages in a one-way communication system, particularly a paging system.

According to the invention, the message is separated from the address. By address is meant the identity code(s) of the receivers. The receivers find their message with the aid of a subaddress. The subaddress can be a pointer, queue number and a field for error detection can be attached to it. In another variant of the invention, the same identity code can be used as subaddress which means that the identity code of the receiver is repeated just before the message.

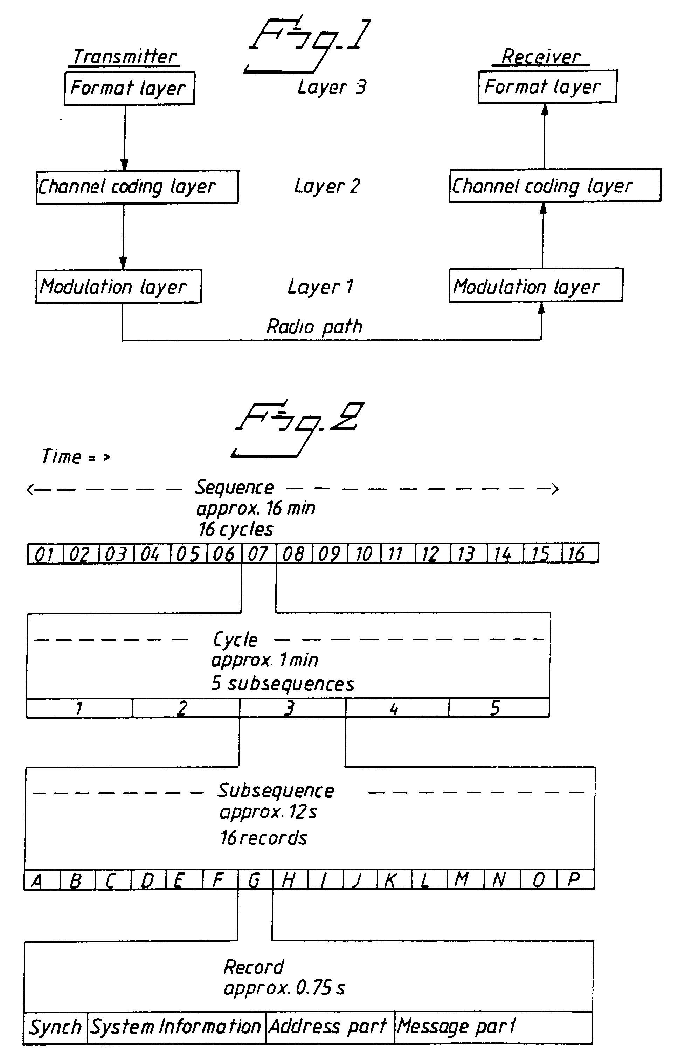

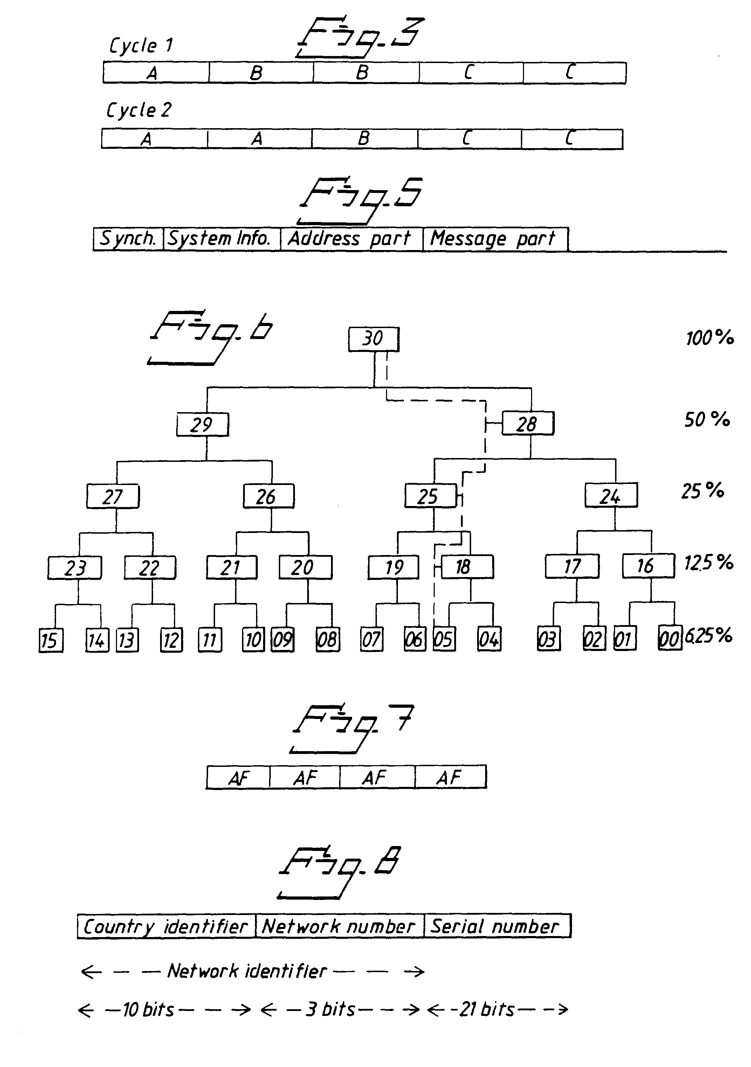

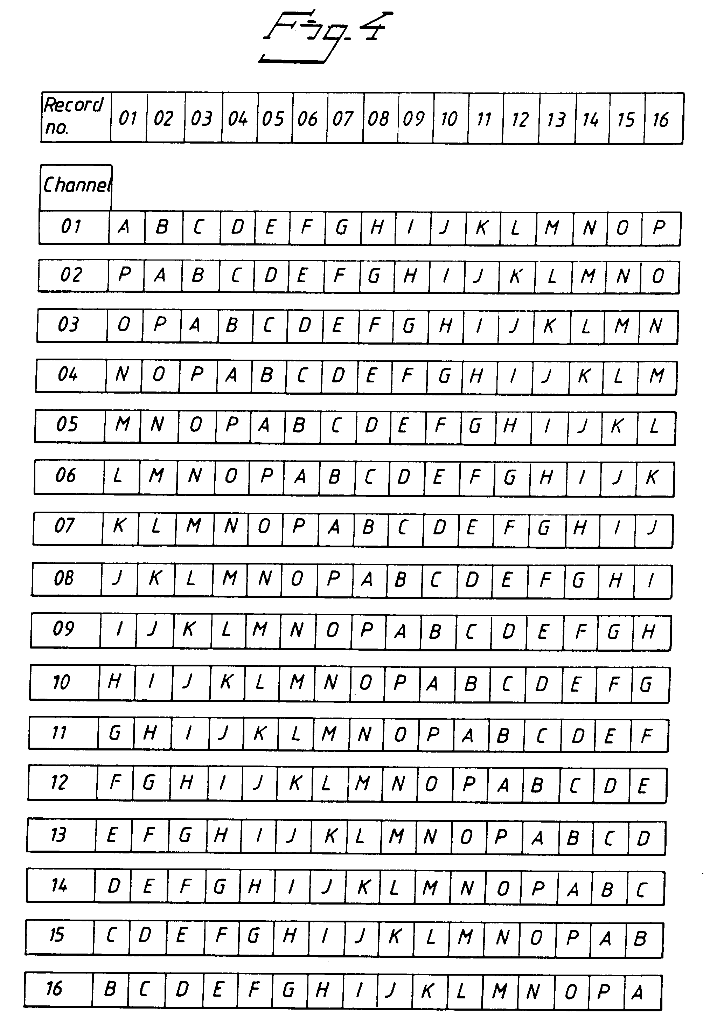

As shown in Figure 1, the radio subsystem is divided into three layers: the modulation layer 1, the channel coding layer 2 and the format layer 3. Each layer has a certain function. Layer n-1 is served by layer n. Each layer is independent of the others, for example the structure of the format layer is independent of the channel coding layer.

The function of the modulation layer is to divide the coded and formatted bits from a transmitter to all receivers. Any differentiation will be carried out in this layer. Interleaving also belongs to this layer.

The channel coding layer has the task of carrying out error detection and correction. The channel coding layer uses layer 1 for receiving/transmitting the bits. This can be quite independent of the format layer. The length of the code word used for the channel coding is independent of the format.

The format layer supplies the following functions: addressing, synchronisation of the receivers in the system, battery saving and the paging field and support for the services in the system.

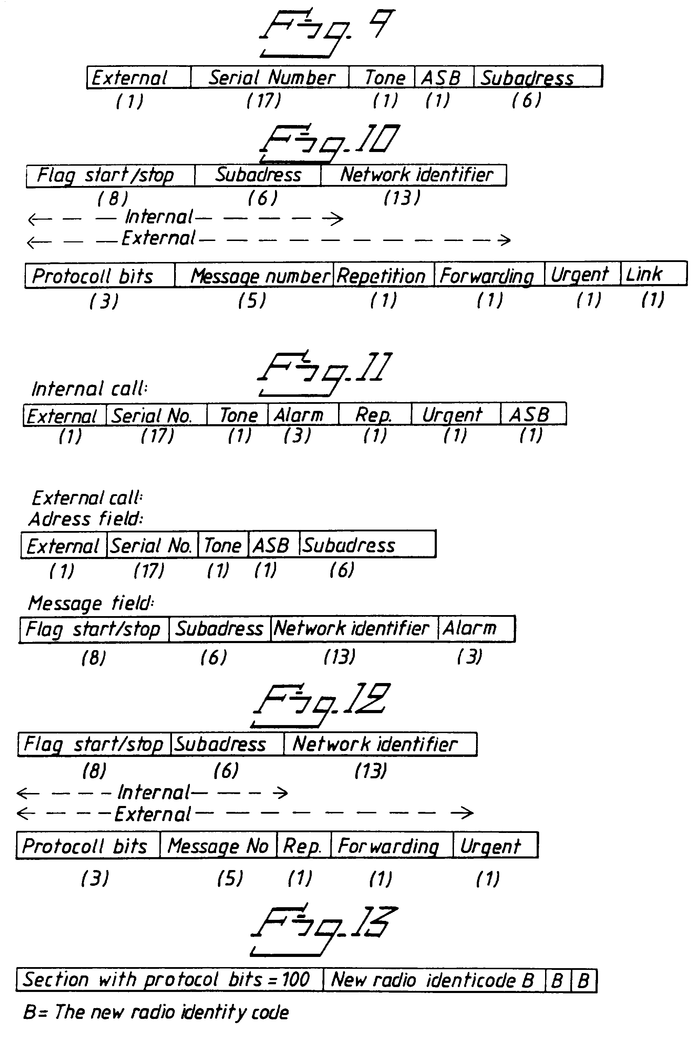

Figure 2 shows the structure of the format. This structure consists of four levels, the tasks of which are described below.

The uppermost level is the sequence level which consists of 16 cycles. The sequence level of the format is only used for battery saving. Pagers with very low power consumption are allocated one of the 16 cycles in which they are in an active state. Normal pagers are active in each of the 16 cycles.

The next level is the cycle level which consists of five subsequences. In a time-divided network, the subsequences are distributed between paging areas so that adjoining paging areas never transmit at the same time.

A subsequence is divided into 16 records. The division has two aims: pagers occupied in the home network use the records for battery saving and pagers occupied outside their home network use the record division for searching through all channels.

The last level is the record level which consists of a synchronisation part, a system information part, an address part and a message part.

The network according to the invention can operate as a time-sharing network. This implies that adjoining paging areas share the same frequency and that different time gaps are allocated to these paging areas. The time-sharing has space at the cycle level so that the subsequences are distributed amongst the paging areas.

One cycle consists of five subsequences. In each cycle, the paging areas affected must be allowed to transmit at least one subsequence. The division of the subsequences between paging areas is not necessarily the same in all cycles. This floating arrangement allows an adaptation of the available transmission times to the traffic offered. An example of this is shown in Figure 3 where the total traffic offered is T, where 0.3 T, 0.3 T and 0.4 T, respectively, are allocated to paging areas A, B, C.

A subsequence consists of 16 records, A-P. Each receiver belongs to only one record in which it is in the active state. In the other records, the receiver is in an idle mode. The record to which the receiver belongs is defined by the four least significant bits of a radio identity code.

| Record | Least significant bits |
|---|---|
| A | 0000 |
| B | 0001 |
| C | 0010 |
| D | 0011 |
| E | 0100 |
| F | 0101 |
| G | 0110 |
| H | 0111 |
| I | 1000 |
| J | 1001 |
| K | 1010 |
| L | 1011 |
| M | 1100 |
| N | 1101 |
| O | 1110 |
| P | 1111 |

The receiver normally listens to its home channel. The home channel of a receiver is the channel marked with the identity code for the network in which the receiver is registered. If the receiver is locked to its home channel, it only listens on the record allocated. In this state, the receiver listens to one record per subsequence. In the other records, the receiver is in idle mode.

If the receiver cannot detect is home channel, it searches among the channels as described in Figure 4.

Figure 5 shows a record structure. The length of time for one record is 0.75 seconds. One record is divided into four parts: synchronisation part, system information part, address part and message part. Receivers which are not addressed in the address part will not listen to the message part. In the message part, these receivers are in idle mode.

The synchronistion part consists of a bit synchronisation word and a format synchronisation word. The bit synchronisation word helps the pager to produce bit synchronisation. The receiver is synchronised to the format of the synchronisation word.

| | |
|---|---|
| Bit synchronisation word: | Undefined |
| Format synchronisation word: | Undefined |

The system information part consists of :

| | |
|---|---|
| Network identity | 13 bits |
| Paging area indicator | 6 bits, which is enough for 64 paging areas per network |
| Frequency subset indicator | 5 bits (see below) |
| Record, subsequence and cycle number | 11 bits total |

The system information part thus has a total length of 35 bits.

The frequency subset indicator allows the network operator to adapt the number of frequencies to the current traffic, that is to say the operator can use all his channels in high traffic and only a part of them in low traffic. The frequency subset indicator refers the receivers to frequencies on which they can wait for their call. All receivers carry a two-digit frequency subset number which is permanently stored in the receiver. Each frequency subset number corresponds to a unique combination of five two-digit numbers.

Figure 6 shows the grouping of frequency subsets. If the frequency subset number is, for example, 05, the corresponding numbers are 05, 18, 25, 28, 30. The receivers will lock to the channel whose frequency subset indicator matches any of the numbers which are linked to its frequency-sharing number. A pager with frequency subset number 05 searches for a channel with the frequency subset indicator which is one of the values 05, 18, 25, 28 or 30 and locks to the channel. With high traffic, several channels will be used and the receiver will find a channel which transmits with a frequency subset indicator equal to 05. With low traffic, some of the channels can be taken out of service and the receiver will then find a channel which, for example, has the frequency subset indicator = 25. This channel will then also carry traffic to the receivers which belong to groups 07, 06 and 04.

All pagers which receive a message in one record are addressed in the address part.

Tone-only calls are transmitted completely in the address part. All other types of paging call (numeric, alphanumeric and transparent data calls) use both the address part and the message part. Where the identity code of the receiver is used as subaddress, tone-only calls must also use the message part.

As can be seen from Figure 7, the address part consists of a number of address fields AF, each one of which relates to only one call.

In Figure 8, the structure of the radio identity code is shown, which is the number which is used by the system on the radio path for identifying the receiver (receivers) to which the paging relates. The radio identity code consists of a network identifier and a serial number.

The country identifier follows the numbering plan defined in CCITT recommendation E. 212. The network number permits eight networks per country. The serial number consists of 21 bits which provide each network with an addressing capacity of 2097152 radio identity codes.

Only the 17 most significant bits of the serial number are transmitted via the radio path. The four least significant bits of the radio identity code are indicated by the record as has been described earlier.

Normally (that is to say for the network-internal traffic), only the serial number is transmitted. The network identifier is only transmitted when the paging call is intended for a visiting receiver.

The format of the address field is shown in Figure 9. The subaddress informs the receiver where the message concerned is transmitted or how it is identified. According to the present invention, there are three different possibilities.
a) The whole subaddress is repeated in the message concerned.
b) The subaddress specifies where in the order of messages the message concerned is transmitted, that is to say the number of the message. If, for example, the value of the subaddress is 3, the message will be the third message transmitted in the message part of this record.
c) The subaddress specifies the position of the message concerned, that is to say a (relative) address at the beginning of the message).

It is possible to combine method a with method b or c.

If a respective receiver is not addressed in the address part, it goes down into a battery-saving idle mode. If a pager has not found its message before the end of the record, the message is lost. This is the case for individual calls but not for sequential group calls.

To separate sequential group calls from individual calls, the subaddresses 60-64 are reserved for sequential group calls. A pager which receives a sequential group call will stay in the channel over several records until the message is received or until the end of the subsequence. This is based on the fact that sequential group calls can be addressed to receivers which belong to different records.

Traffic to visiting receivers is marked with external set to 1. These receivers are addressed with the whole radio identity code, that is to say both the network identifier and the serial number. The network identifier is transferred in the message field (see below).

The last paging call in the record is specified by the address end bit (ASB) being set to 1. Another variant of the invention is that a special address can be provided which indicates the end of the address part.

The message part contains the messages themselves. Only pagers which have been addressed listen to this part. The message part consists of a number of message fields which correspond to address fields.

A message field consists of a section which is shown in Figure 10 and a transparent part. The section contains a flag, the subaddress, the message number and fields which specify the application of special services (repetition, forwarding and urgent calls). After that begins the transparent part which transfers the message itself. The total length of the section is 26 bits for internal calls and 39 bits for external calls. The section is followed by the transparent part which continues until the next flag is transmitted on the radio path. To avoid that the flag appears in the message, bit stuffing is used.

The three protocol bits tell the receiver which protocol is used according to the table below.

| Message Type | Protocol bits |
|---|---|
| Numeric | 000 |
| Alphanumeric | 001 |
| Data | 010 |
| Forwarding of the last message number | 011 |
| Remote programming of further identity codes | 100 |
| Undefined | 101-111 |

The link bit is used when a message is very long. When the link bit is set to 1, this means that the message will be linked together with the next message which is transmitted to the receiver. This function is used when the calling party has sent a message which exceeds the maximum length allowed on the radio path. The network then divides the message into several parts which are transmitted in different records. The link bit enables the receiver to set the same message again.

The maximum number of bits in one message is shown below. The maximum number of bits does not include the section.

| Message Type | Maximum Length |
|---|---|
| Numeric message | 100 bits |
| Alphanumeric message | 3000 bits |
| Transparent data | 4100 bits |

Linking of messages can only be used for alphanumeric messages and transparent data messages. For all other types of message, the link bit is set to 0. A pager which receives a message which appears to be longer than the maximum length according to the above table produces the end record that the transmission has not been successful.

Transmission of a message which covers two records is interrupted by the synchronisation part, the system information part and the address part in the second record. The transmission of the message will be completed directly after the first part. Only alphanumeric and transparent data messages can be divided into two records. It is also possible to use the link bit for messages of such length.

According to a preferred embodiment, the pager will be able to handle eight alarm signals specified by the alarm field. A tone call is specified by the tone bit being set to 1. For a tone-only call within the network, no subaddressing is used. This is the only case where subaddressing is not used. Figure 11 shows how tone-only calling is handled.

The functions described below are initiated by the network operator or automatically by the network itself. These functions use the protocol bits in the message section. Automatic forwarding of the last message number gives the receiver the possibility to detect a loss of a message by comparing the last received message number with the stored number for the last correctly received message. Forwarding of the last message number is assumed to take up space in low traffic. Forwarding of the last message number only uses the section for the message part. The transparent part is excluded. The message number field in the section contains the last message number as is shown in Figure 12.

The service of remote programming of the radio identity code provides the network operator with the possibility of programming new radio identity codes from a remote terminal via the radio path. The new radio identity codes are over and above the basic radio identity code of the receivers. Figure 13 shows how this type of message is transmitted. To ensure a reliable transmission of the new (extra radio identity code), the new radio identity code is transmitted three times and contains both the network identifier and the serial number. If there is a lack of correspondence between the received radio identity codes, majority decision is used.

The method according to the invention thus provides a way of transmitting messages which involves battery saving by the fact that receivers which are not addressed in the address part do not listen to the message part but go into a battery-saving idle mode. Other embodiments than that described above in detail are naturally possible which is obvious to an expert in the field. The invention is only limited by the claim below.

## Claims

1. Method for transferring messages in a one-way communication system, including a transmitting unit with corresponding receivers adapted to be called from the transmitting unit whereby the messages are transmitted to one receiver or a group of receivers, wherein the communication system uses a number of layers viz. the first layer, called modulation layer, which distributes coded and formatted bits from the transmitting unit to receivers, a second layer, called channel coding layer, which is used for detecting faults and correction of faults, and a third layer, the format layer, which includes functions for addressing and synchronizing receivers in the communication system, battery saving and dividing paging areas in separate geographic areas, the format layer including a period of time, called sequence layer, divided in a number of first periods, called cycles, wherein receivers which are normal users of power are activated in each cycle, the cycles being divided into a number of second periods, called subsequences, divided into third periods, called records, **characterised** in that receivers which are in a battery saving situation are activated during only one cycle of said number of cycles, that each receiver has one unique record in which it is activated, the records being divided into an addressing part, pointing out receivers which are to receive messages and having a subaddress part pointing out the number or the position of the message, and a message part whereby the length of the addressing part depends on the number of pagings in the record, that the message depending of its length occupies varying number of bits in the message part, that receivers which are not addressed return to the battery saving situation without receiving the messages, that each record includes means for synchronizing the receivers, and that a system information part gives unique information regarding the system.

## Patentansprüche

1. Verfahren zum Übertragen von Nachrichten in einem einseitigen Kommunikationssystem, das eine Sendeeinheit mit zugehörigen Empfängern umfaßt, die dazu vorgesehen sind, von der Sendeeinheit angerufen zu werden, wodurch Nachrichten zu einem Empfänger oder einer Gruppe von Empfängern übertragen werden, wobei das Kommunikationssystem eine Anzahl von Ebenen verwendet, nämlich die erste Ebene, genannt Modulationsebene, die codierte und formatierte Bits von der Sendeeinheit zu Empfängern verteilt, eine zweite Ebene, genannt Kanalcodierebene, die zum Detektieren und Korrigieren von Fehlern verwendet wird, und eine dritte Ebene, die Formatierebene, die Funktionen zum Adressieren und Synchronisieren der Empfänger in dem Kommunikationssystem, Batteriesparfunktionen und das Aufteilen von Paging-Bereichen in separate geografische Bereiche umfaßt, wobei die Formatierebene einen Zeitabschnitt, genannt Sequenzebene, umfaßt, die wiederum in eine Anzahl von ersten Abschnitten, genannt Zyklen, aufgeteilt ist, wobei Empfänger, die Energie im normalen Umfang verwenden, in jedem Zyklus aktiviert werden, wobei die Zyklen in eine Anzahl von zweiten Abschnitten, genannt Subsequenzen, aufgeteilt sind, diese wiederum sind aufgeteilt in dritte Abschnitte, genannt Datensätze, dadurch gekennzeichnet, daß Empfänger, die sich in einem Batteriesparmodus befinden, lediglich während eines Zyklus dieser Anzahl von Zyklen aktiviert werden, daß jeder Empfänger einen eindeutigen Datensatz aufweist, in dem er aktiviert wird, wobei die Datensätze aufgeteilt sind in einen Adressierteil, in dem auf Empfänger verwiesen wird, die Nachrichten empfangen sollen, wobei dieser Adressierteil einen Subadressenteil umfaßt, der auf die Nummer oder die Position der Nachricht hinweist, und einen Nachrichtenteil, wobei die Länge des Adressierteils von der Anzahl von Pagings in dem Datensatz abhängt, daß die Nachricht abhängig von ihrer Länge eine unterschiedliche Anzahl von Bits in dem Nachrichtenteil einnimmt, daß Empfänger, die nicht adressiert werden, in den Batteriesparmodus zurückkehren, ohne die Nachrichten zu empfangen, daß jeder Datensatz Mittel zum Synchronisieren der Empfänger umfaßt, und daß ein Systeminformationsteil eindeutige Informationen betreffend das System gibt.

## Revendications

1. Procédé de transfert de messages dans un système de communication à sens unique, comprenant une unité émettrice et des récepteurs correspondants qui peuvent être appelés par l'unité émettrice de sorte que les messages sont transmis à un seul récepteur ou à un groupe de récepteurs, dans lequel le système de communication utilise plusieurs couches, à savoir la première couche, appelée couche de modulation, qui distribue les bits codés et formatés venant de l'unité émettrice vers les récepteurs, une deuxième couche, appelée couche de codage de canal, qui est utilisée pour la détection des erreurs et la correction des erreurs, et une troisième couche , appelée couche de format, qui contient des fonctions d'adressage et de synchronisation des récepteurs dans le système de communication, d'économie de pile et de répartition des zones d'appel dans des zones géographiques séparées, la couche de format incluant une période de temps, appelée couche de séquence, divisée en une pluralité de premières périodes, appelées cycles, dans lesquelles les récepteurs qui sont des utilisateurs normaux d'énergie sont activés à chaque cycle, les cycles étant divisés en une pluralité de deuxièmes périodes, appelées sous-séquences, elles-mêmes divisées en troisièmes périodes appelées blocs, caractérisé en ce que les récepteurs qui sont dans une situation d'économie de pile sont activés pendant un seul cycle de ladite pluralité de cycles, en ce que chaque récepteur a un bloc unique dans lequel il est activé, les blocs étant divisés en une partie d'adressage, qui indique les récepteurs qui doivent recevoir des messages et qui comporte une partie de sous -adresse indiquant le numéro ou la position du message, et une partie message, de sorte que la longueur de la partie d'adressage dépend du nombre d'appels de recherche dans le bloc, en ce que le message selon sa longueur occupe un nombre variable de bits dans la partie message, en ce que les récepteurs qui ne sont pas adressés reviennent à la situation d'économie de pile sans recevoir les messages, en ce que chaque bloc comprend des moyens de synchronisation des récepteurs, et en ce qu'une partie information de système fournit des informations spécifiques concernant le système.
